# EUROPÄISCHE PATENTSCHRIFT

(11) **EP 2 691 629 B1**
(45) Veröffentlichungstag und Bekanntmachung des Hinweises auf die Patenterteilung: **27.04.2016**
(21) Anmeldenummer: 12718093.3
(22) Anmeldetag: 27.03.2012
(51) Int. Cl.: B23P 15/10, F16J 9/22, F02F 3/22, F02F 3/16

(54) **VERFAHREN ZUR HERSTELLUNG EINES KOLBENS FÜR EINEN VERBRENNUNGSMOTOR**
PROCESS FOR PRODUCING A PISTON FOR AN INTERNAL COMBUSTION ENGINE
PROCÉDÉ DE FABRICATION D'UN PISTON POUR UN MOTEUR À COMBUSTION INTERNE

(30) Priorität: 30.03.2011 DE 102011006409
(43) Veröffentlichungstag der Anmeldung: 05.02.2014
(73) Patentinhaber: Federal-Mogul Nürnberg GmbH, 90441 Nürnberg (DE)
(72) Erfinder: BABERG, Arnd, 90768 Fürth (DE); DÖRNENBURG, Frank, Thomas, Hugo, 91207 Lauf (DE); LADES, Klaus, 90459 Nürnberg (DE)
(74) Vertreter: Hoffmann Eitle
(86) Internationale Anmeldenummer: PCT/EP2012/055403
(87) Internationale Veröffentlichungsnummer: WO 2012/130839

(56) Entgegenhaltungen:
- WO-A1-2005/046928
- DE-B- 1 019 519
- DE-B- 1 025 221

## Beschreibung

### Technisches Gebiet

Die Erfindung betrifft ein Verfahren zur Herstellung eines Kolbens für einen Verbrennungsmotor.

Bei Motorkolben ist der Bereich der obersten Ringnut und der Brennraummulde besonderen Belastungen ausgesetzt. Dem wird häufig durch einen Ringträger oder eine Ringnutarmierung Rechnung getragen. Gleichzeitig ist häufig ein ringförmiger Kühlkanal vorgesehen, der sich in diesem Bereich befindet.

### Stand der Technik

Es ist bekannt, Ringträger einzugießen und/oder Salzkerne vorzusehen, die nach dem Herausspülen einen ringförmigen Kühlkanal einschließlich Zu- und Abflüssen belassen.

Ferner ist beispielsweise aus der DE 199 15 782 A1 ein Kolben bekannt, bei dessen Herstellung vom Kolbenboden her durch Drehen mit Vorschub in Axialrichtung des Kolbens ein Kühlkanal ausgebildet wird, der nachfolgend durch ein pulvermetallurgisch hergestelltes Aluminiumbauteil verschlossen wird.

Ähnliche Anordnungen sind aus der DD 130 368 Z, der DE 103 39 54 B, der DE 10 2006 027 355 A1, der DE 35 18 497 A, der JP 58 190 538 A2, der DE 15 83 747 C, der US 3181514 A, der FR 1 301 299 A, der DE 10 01 862 B, der FR 1 246 794 A, der DE 10 25 221 B und der DE 10 19 519 B bekannt.

### Darstellung der Erfindung

Der Erfindung liegt die Aufgabe zugrunde, ein im Hinblick auf die Effizienz verbessertes Herstellungsverfahren für Kolben für Verbrennungsmotoren und einen demnach hergestellten Kolben zu schaffen.

Die Lösung dieser Aufgabe erfolgt zum einen durch das im Patentanspruch 1 beschriebene Verfahren.

Demzufolge wird in einem gegossenen Kolbenrohling von einer Brennraummulde ausgehend in weitgehend radialer Richtung eine Nut eingearbeitet und nachfolgend zur Ausbildung eines Kühlkanals verschlossen. Hierdurch kann zum einen in vorteilhafter Weise der bislang erforderliche Salzkern zur Ausbildung des Kühlkanals vermieden und der Gießprozess damit automatisiert werden. Ferner wird eine wesentlich umfangreichere maschinelle Bearbeitung erreicht, und die Bearbeitung von Hand verringert, was die Verlässlichkeit erhöht, Ausschuss reduziert und damit das Verfahren insgesamt effizienter macht. Ferner kann dadurch, dass sich der Kühlkanal in einem Bereich "neben" der Brennraummulde befindet, die Kühlwirkung in den besonders belasteten Bereichen verbessert werden. Insbesondere ist der Kühlkanal verglichen mit herkömmlichen Gestaltungen vergleichsweise hoch, insbesondere höher als die oberste Ringnut angeordnet, so dass der beschriebene Vorteil erreicht werden kann. Schließlich bietet die Abdeckung oder der Verschluss des Kühlkanals durch ein bezüglich des Gussmaterials des Kolbenrohlings separates Material die Möglichkeit, dieses im Hinblick auf die Anforderungen betreffend die Hitzebeständigkeit in besonderer Weise anzupassen und, wie nachfolgend genauer erläutert, mit hierfür besonders vorteilhaften Eigenschaften zu versehen.

Bevorzugte Weiterbildungen des erfindungsgemäßen Verfahrens sind in den weiteren Ansprüchen beschrieben.

Die Anforderungen können besonders gut erfüllt werden, und gleichzeitig bietet es für die Vereinfachung im Rahmen des Herstellungsverfahrens Vorteile, wenn das Verschließen des Kühlkanals durch ein Blech erfolgt. Dieses kann mittels eines Fügeverfahrens mit dem Kolbenrohling, der in dem fraglichen Bereich vorbearbeitet sein kann, verbunden werden.

Bereits durch den Fügeprozess, jedoch ebenso gut nach dem Fügen kann in vorteilhafter Weise zumindest bereichsweise ein Umschmelzen des Bleches erfolgen, um damit das Gefüge zu feinen und somit in dem hochbelasteten Bereich ein besonders widerstandsfähiges Gefüge auszubilden. Bevorzugt ist das Blech aus Aluminium oder einer Aluminiumlegierung ausgeführt, so dass die thermophysikalischen Eigenschaften des Blechs denjenigen des Kolbens ähneln, da dieser ebenfalls aus Aluminium oder einer Aluminiumlegierung gefertigt ist. Bevorzugt sind die beiden Legierungen oder Werkstoffe im Wesentlichen identisch. Im Hinblick auf das Umschmelzen des Verschlusses, insbesondere des Blechs des Kühlkanals, sei erwähnt, dass diese Maßnahme auch ohne die radiale Ausbildung des Kühlkanals seine Vorteile entfaltet und insoweit als hierin beschriebene unabhängige Neuerung zu sehen ist. Sie kann jedoch mit sämtlichen hierin beschriebenen Maßnahmen kombiniert werden.

Der Gießprozess kann weiter vereinfacht werden, wenn in vorteilhafter Weise auch ein Ringträger als ein Gießteil vermieden werden kann, indem an der Außenseite des Kolbens eine weitere radiale Nut eingebracht, mit Material gefüllt und darin eine Ringnut eingearbeitet wird. Die Nut kann beispielsweise im Wesentlichen V-förmig ausgebildet werden, und das Material kann beispielsweise durch thermisches Spritzen eingebracht werden. Auch für die beschriebene Ausbildung einer radialen Nut an der Außenseite sei erwähnt, dass sie mit einer beliebigen Gestaltung eines Kühlkanals, insbesondere auch mit einem in axialer Richtung erzeugten Kühlkanal kombiniert werden kann und auch in diesem Fall durch Vermeidung von Eingießteilen seine vorteilhaften Wirkungen entfaltet. Eine Kombination mit sämtlichen weiteren hierin beschriebenen Maßnahmen ist jedoch möglich und vorteilhaft.

### Kurze Beschreibung der Zeichnungen

Nachfolgend wird ein in den Zeichnungen dargestelltes Ausführungsbeispiel der Erfindung näher erläutert. Es zeigen:
- Fig. 1: eine Schnittansicht eines erfindungsgemäßen Kolbens in einem ersten Stadium;
- Fig. 2: eine Schnittansicht eines erfindungsgemäßen Kolbens in einem zweiten Stadium; und
- Fig. 3: eine Schnittansicht eines erfindungsgemäßen Kolbens in einem dritten Stadium

### Ausführliche Beschreibung einer bevorzugten Ausführungsform der Erfindung

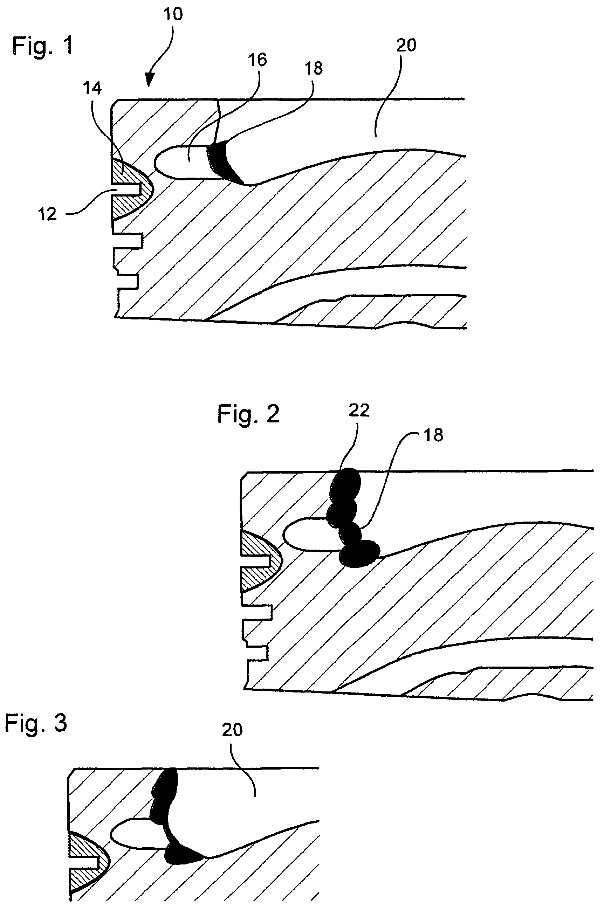

In Fig. 1 ist etwas mehr als die Hälfte eines oberen Randbereichs eines erfindungsgemäßen Kolbens gezeigt, der mit mehreren Ringnuten versehen ist, wobei die oberste Ringnut 12 in besonderer Weise und ohne beim Gießprozess erforderliche Eingießteile, wie z.B. Ringträger, ausgebildet wurde. Insbesondere wurde an dem gegossenen Kolbenrohling eine radiale, im Wesentlichen V-förmige Nut ausgebildet und mit einem besonders verschleißfesten Material 14, beispielsweise durch thermisches Spritzen, gefüllt. Hieraus wurde die Nut 12 herausgearbeitet, die somit vollständig in einem besonders verschleißfesten Material ausgebildet ist und in vorteilhafter Weise den besonderen Belastungen in diesem Bereich Stand hält.

Dies gilt in gleicher Weise für die besondere Gestaltung eines Kühlkanals 16 und dessen Abdeckung in Form eines Blechs 18. In Fig. 1 ist ein Stadium im Rahmen der Herstellung gezeigt, in dem ein Kolbenrohling, der typischerweise gegossen und mechanisch vorbearbeitet wurde, von der Brennraummulde 20 aus in radialer Richtung (gemäß Fig. 1 nach links) mit einer Nut für den späteren Kühlkanal 16 versehen wurde. Wie in den Figuren gezeigt ist, kann der Kühlkanal in geeigneter Weise zur Außenseite, d.h. zur Ringnut 12 des Kolbens hin mit einem gerundeten Nutengrund versehen werden. Diese Nut wird in dem gezeigten Beispiel durch ein Blech 18 verschlossen, das mit einem geeigneten Fügevorgang angebracht wird. Das den späteren Kühlkanal 16 verschließende Blech weist im Wesentlichen eine Ringform auf. Auch die V-Form des Materials 14 im Bereich der obersten Ringnut sowie der hierfür vorgesehenen Nut kann eine gerundete Spitze des "V" aufweisen.

Wie in Fig. 2 gezeigt ist, kann das Blech 18 zumindest bereichsweise, in dem gezeigten Fall beispielsweise am oberen und unteren Ende, durch Umschmelzen derart bearbeitet werden, dass eine Gefügefeinung auftritt. Dies kann ferner für hierzu benachbarte Bereiche 22 an dem Kolbenrohling, in dem gezeigten Fall an der Brennraummulde, vorgenommen werden. Wie erwähnt, kann dieses Umschmelzen im Rahmen des Fügevorgangs des Blechs 18 erfolgen oder als separater, nachfolgender Bearbeitungsschritt.

In Fig. 3 ist schließlich gezeigt, wie nach dem Umschmelzen im Wesentlichen die gesamte seitliche Begrenzung der Brennraummulde 20 in geeigneter Weise und typischerweise spanend nachbearbeitet wird, um die gewünschte Kontur auszubilden. Die beschriebene Bearbeitung sowie der Gießprozess, bei dem in vorteilhafter Weise auf Einlegeteile verzichtet werden kann, kann umfangreich automatisiert werden, so dass die Effizienz erhöht und die Häufigkeit von Fehlern verringert wird.

## Patentansprüche

1. Verfahren zur Herstellung eines Kolbens (10) für einen Verbrennungsmotor, bei dem in einen gegossenen Kolbenrohling von einer Brennraummulde (20) ausgehend in weitgehend radialer Richtung eine Nut eingearbeitet und nachfolgend zur Ausbildung eines Kühlkanals (16) verschlossen wird.

2. Verfahren nach Anspruch 1,
**dadurch gekennzeichnet, dass**
die Nut mittels eines Blechs (18) verschlossen wird.

3. Verfahren nach Anspruch 2,
**dadurch gekennzeichnet, dass**
das Blech (18) zumindest bereichsweise umgeschmolzen wird.

4. Verfahren nach einem der vorangehenden Ansprüche,
**dadurch gekennzeichnet , dass**
ferner von der Außenseite des Kolbens (10) her eine radiale Nut eingebracht und mit Material (14) gefüllt wird, und hieraus eine Ringnut (12) gearbeitet wird.

## Claims

1. Method for producing a piston (10) for an internal combustion engine, in which a groove is worked into a cast piston blank starting from a combustion chamber recess (20) in largely radial direction and subsequently closed to form a cooling channel (16).

2. Method according to claim 1, **characterised in that** the groove is closed by means of a metal sheet (18).

3. Method according to claim 2, **characterised in that** the metal sheet (18) is remelted at least in some regions.

4. Method according to one of the preceding claims, **characterised in that** further away from the outer side of the piston (10), a radial groove is introduced and filled with material (14), and an annular groove (12) is worked therefrom.

## Revendications

1. Procédé de fabrication d'un piston (10) pour un moteur à combustion interne, dans lequel une rainure est ménagée dans une ébauche de piston coulée en partant d'une cavité de chambre de combustion (20) dans une direction largement radiale, puis fermée afin de réaliser un canal de refroidissement (16).

2. Procédé selon la revendication 1,
**caractérisé en ce que** la rainure est fermée au moyen d'une tôle (18).

3. Procédé selon la revendication 2,
**caractérisé en ce que** la tôle (18) est refondue au moins par endroits.

4. Procédé selon l'une quelconque des revendications précédentes, **caractérisé en ce qu'**en outre une rainure radiale est ménagée depuis le côté extérieur du piston (10) et est remplie d'un matériau (14), dans lequel est ménagée une rainure annulaire (12).
